(19) Europäisches Patentamt
European Patent Office
Office européen des brevets

(11) Publication number: 0 134 861 B1

(12) EUROPEAN PATENT SPECIFICATION

(45) Date of publication of patent specification: 09.12.87

(51) Int. Cl.[4]: C 08 F 20/36, B 29 D 11/00

(21) Application number: 83305633.6

(22) Date of filing: 22.09.83

(54) **Resin material for plastic lens and lens composed thereof.**

(43) Date of publication of application:
27.03.85 Bulletin 85/13

(45) Publication of the grant of the patent:
09.12.87 Bulletin 87/50

(84) Designated Contracting States:
BE CH DE FR GB IT LI SE

(56) References cited:
EP-A-0 059 561
FR-A-2 431 511
US-A-4 376 800

(73) Proprietor: TORAY INDUSTRIES, INC.
2, Nihonbashi-Muromachi 2-chome Chuo-ku
Tokyo 103 (JP)

(72) Inventor: Fukuda, Tadanori
34-6, Nango 2-chome
Otsu-shi Shiga-ken (JP)
Inventor: Sakamoto, Sadayuki
378, Ogawa Shigaraki-cho
Koga-gun Shiga-ken (JP)

(74) Representative: Coleiro, Raymond et al
MEWBURN ELLIS & CO. 2/3 Cursitor Street
London EC4A 1BQ (GB)

EP 0 134 861 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a resin material for a plastic lens and also to a lens composed thereof.

A plastic lens is advantageous over a glass lens in that the plastic lens is easier to make, and when it is used as a spectacle lens, a high safety is assured because it is light in weight and has a good impact resistance.

An acrylic resin, a polycarbonate resin, an allyl diglycolcarbonate resin and a polystyrene resin have heretofore been used as a resin material for a plastic lens. Among these resins, diethylene glycol bisallylcarbonate, which is a thermosetting resin, is widely used as a plastic lens for a sight-accomodating spectacle. This resin has various advantageous characteristics. For example, the impact resistance is excellent, the degree of the spectacle is not greatly varied depending upon the change of the temperature, and the resin is excellent in its cutting property and processability.

However, the refractive index of diethylene glycol bisallylcarbonate is 1.50 and a plastic lens made of this resin has a greater thickness at the peripheral edge portion thereof than that of a glass lens. This defect is more prominent as the degree of the lens is increased.

Various resins for plastic lenses have recently been proposed as resin materials free of the above-mentioned defect. For example, GB—B—2,034,721 teaches that a copolymer of a dimethacrylate having a bisphenol group with chlorostyrene has a refractive index of 1.591. Furthermore, JP—A—166214/81 teaches that a copolymer of a dimethacrylate having a tetrabromobisphenol group with chlorostyrene has a refractive index of 1.603. Although these resins have a considerably high refractive index, they possess poor toughness and impact resistance.

As means for imparting a good toughness and an appropriately high refractive index, there is known a method comprising mixing or copolymerizing the resin with polyurethane. For example, US—A—4,360,653 teaches that a copolymer of polyol(allylcarbonate) with polyurethane having a terminal acrylate functionality is excellent in strength, impact resistance and optical clarity, and EP—A—59,561 teaches that a reaction product of hydroxymethacrylate and xylene diisocyanate has a refractive index of at least 1.55. However, these resins do not have a high refractive index sufficient to provide a sight-accommodating lens.

It is a primary object of the present invention to provide a resin material for a plastic lens, which has a refractive index of at least 1.58, preferably at least 1.60, and is excellent in toughness.

Another object of the present invention is to provide a tough plastic lens having a high refractive index.

In accordance with the present invention, there are provided a resin material for a plastic lens, which is composed of a polymer obtained by polymerizing a urethanized acrylic or methacrylic monomer formed by reacting an acrylic or methacrylic monomer having a nucleus-halogen-substituted aromatic ring and a hydroxyl group with a polyfunctional isocyanate; and a plastic lens composed of said resin material. The halogen substituent is chlorine, bromine, or iodine.

A polymer obtained by copolymerizing the above-mentioned urethanized acrylic or methacrylic monomer with at least one other vinyl monomer having an aromatic ring can also be used advantageously. This other vinyl monomer having an aromatic ring in the molecule may be used in an amount of up to 70% by weight based on the total weight of the monomers.

In this specification, by the term "lens" is meant a plate-like article, at least one surface of which is curved.

As the acrylic or methacrylic monomer having a nucleus-halogen-substituted aromatic ring and a hydroxyl group in the molecule (hereinafter referred to as "monomer (a)" for brevity), compounds represented by the following formulae (I), (II) and (III) are preferably used in the present invention:

(I) 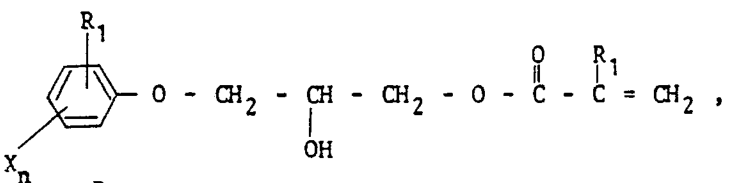

(II) 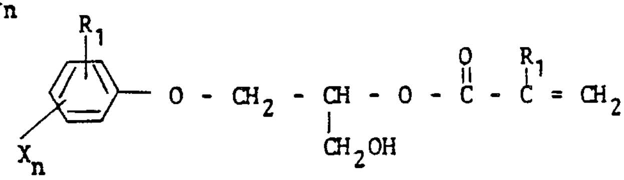

and

(III) 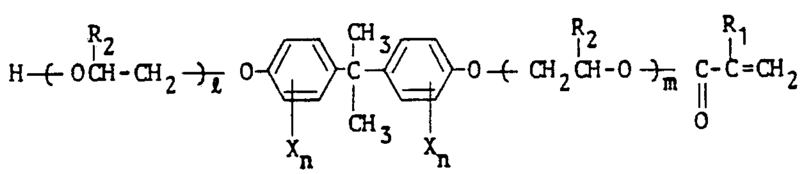

wherein X is chlorine, bromine or iodine, each of $R_1$ and $R_2$ is a methyl group or hydrogen, n is an integer of from 1 to 4, and l and m are integers of from 0 to 4 with the proviso that the sum of l and m is an integer of from 0 to 4.

As specific examples of the compounds of the formulae (I) and (II), there can be mentioned 3-(2,4-dibromophenoxy)-2-hydroxypropyl acrylate, 2-(2,4-dibromophenoxy-1-hydroxymethyl)ethyl acrylate, 3-(2,4,6-tribromophenoxy)-2-hydroxypropyl acrylate, 2-(2,4,6-tribromophenoxy)-1-hydroxymethylethyl acrylate, 3-(2,4-dibromophenoxy)-2-hydroxypropyl methacrylate, 3-(2,4,6-tribromophenyoxy)-2-hydroxypropyl methacrylate, 3-(2,4-iodophenoxy)-2-hydroxypropyl acrylate and 3-(2,4,6-triiodophenoxy)-2-hydroxypropyl acrylate. Among the foregoing compounds, 3-(2,4,6-tribromophenoxy)-2-hydroxypropyl acrylate, 3-(2,4-dibromophenoxy)-2-hydroxypropyl acrylate and 3-(2,4-iodophenoxy)-2-hydroxypropyl acrylate are preferred.

As other specific examples of the compounds of the formulae (I) and (II), there can be mentioned 3-(2,4,6-tribromo-3-methylphenoxy)-2-hydroxypropyl acrylate, 2-(2,4,6-tribromo-3-methylphenoxy-1-hydroxymethyl)ethyl acrylate, 3-(2,4-dibromo-3-methylphenoxy)-2-hydroxypropyl acrylate, 3-(2,6-diiodo-3-methylphenoxy)-2-hydroxypropyl acrylate, 3-(2,4,6-tribromo-3-methylphenoxy)-2-hydroxypropyl methacrylate, 3-(3-methyl-5-bromophenoxy)-2-hydroxypropyl acrylate and 3-(3-methyl-5-iodophenoxy)-2-hydroxypropyl methacrylate. Among the foregoing compounds, 3-(2,4,6-tribromo-3-methylphenoxy)-2-hydroxypropyl acrylate, 3-(2,4-dibromo-3-methylphenoxy)-2-hydroxypropyl acrylate, 3-(3-methyl-5-bromophenoxy)-2-hydroxypropyl acrylate and mixtures thereof are preferred.

As specific examples of the compounds of the formula (III), there can be mentioned 2-(4-hydroxy-ethoxy-3,5-dibromophenyl)-2-(4-acryloxyethoxy-3,5-dibromophenyl)propane, 2-(4-hydroxyethoxy-3,5-dibromophenyl)-2-(4-methacryloxyethoxy-3,5-dibromophenyl)propane, 2-(4-hydroxyethoxy-3,5-dibromophenyl)-2-(4-acryloxy-3,5-dibromophenyl)propane, 2-(4-hydroxyethoxy-3,5-dibromophenyl)-2-(4-methacryloxy-3,5-dibromophenyl)propane, 2-(4-hydroxy-3,5-dibromophenyl)-2-(4-acryloxy-3,5-dibromophenyl)propane, 2-(4-hydroxy-3,5-dibromophenyl)-2-(4-methacryloxy-3,5-dibromophenyl)propane, 2-(4-hydroxydiethoxy-3,5-dibromophenyl)-2-(4-acryloxydiethoxy-3,5-dibromophenyl)propane and 2-(4-hydroxydiethoxy-3,5-dibromophenyl)-2-(4-methacryloxydiethoxy-3,5-dibromophenyl)propane. Among the foregoing compounds, 2-(4-hydroxyethoxy-3,5-dibromophenyl)-2-(4-acryloxyethoxy-3,5-dibromophenyl)propane, 2-(4-hydroxydiethoxy-3,5-dibromophenyl)-2-(4-methacryloxydiethoxy-3,5-dibromophenyl)propane and mixtures thereof are preferred.

The above-mentioned compounds may be used alone or in the form of a mixture of two or more of them.

As the polyfunctional isocyanate (hereinafter referred to as "isocyanate (b)" for brevity), there can be mentioned diisocyanates such as hexamethylene diisocyanate, isophorone diisocyanate, 2,2,4-trimethylhexamethylene diisocyanate, dicyclohexylmethane diisocyanate, lysine diisocyanate methyl ester, xylylene diisocyanate, bis(isocyanatomethyl)cyclohexane, tolylene diisocyanate and 4,4'-diphenylmethane diisocyanate, and polyfunctional isocyanates having a functionality of 3 or more, such as a biuret reaction product of hexamethylene diisocyanate, an adduct of hexamethylene diisocyanate to trimethylolpropane, 2-isocyanatoethyl-2,6-diisocyanatohexanoate, 1,6,11-undecane triisocyanate, an adduct of isophorone diisocyanate with trimethylolpropane, an adduct of xylene diisocyanate with trimethylolpropane and an adduct of bis(isocyanatomethyl)cyclohexane with trimethylolpropane.

Among the foregoing isocyanate compounds, xylylene diisocyanate, isophorone diisocyanate and bis(isocyanatomethyl)cyclohexane are preferred.

The molar ratio between the acrylic or methacrylic monomer (a) and the polyfunctional isocyanate (b) may be such that the NCO/OH molar ratio is in the range of from 0.5 to 2.0, preferably from 0.8 to 1.0. If the NCO/OH molar ratio is lower than 0.5, the impact strength is reduced, and furthermore, the flexural strength, heat softening property and cutting or grinding property are degraded. If the NCO/OH molar ratio exceeds 2.0, the polymer is readily discolored.

When the acrylic or methacrylic monomer (a) is reacted with the polyfunctional isocyanate (b), the hydroxyl group of the acrylic or methacrylic monomer (a) reacts with the isocyanate group of the polyfunctional isocyanate (b) to form a urethanized acrylic or methacrylic monomer (hereinafter referred to as "monomer (A)" for brevity).

In the present invention, this urethanized acrylic or methacrylic monomer (A) is subjected to addition polymerization or is copolymerized with the other vinyl monomer(s) having an aromatic ring in the molecule (hereinafter referred to as "monomer (B)" for brevity).

As the vinyl monomer (B) having an aromatic ring in the molecule, there can be mentioned styrene, divinylbenzene, chlorostyrene, dichlorostyrene, bromostyrene, dibromostyrene, iodostyrene, phenyl acrylate, phenyl methacrylate, monochlorophenyl acrylate, monochlorophenyl methacrylate, dichlorophenyl acrylate, dichlorophenyl methacrylate, trichlorophenyl acrylate, trichlorophenyl methacrylate, monobromophenyl acrylate, monobromophenyl methacrylate, dibromophenyl acrylate, dibromophenyl methacrylate, tribromophenyl acrylate, tribromophenyl methacrylate, pentabromophenyl acrylate, pentabromophenyl methacrylate, monochlorophenoxyethyl acrylate, monochlorophenoxyethyl methacrylate, dichlorophenoxyethyl acrylate, dichlorophenoxyethyl methacrylate, trichlorophenoxyethyl acrylate, trichlorophenoxyethyl methacrylate, monobromophenoxyethyl acrylate, monobromophenoxyethyl methacrylate, dibromophenoxyethyl acrylate, dibromophenoxyethyl methacrylate, tribromophenoxyethyl

acrylate, tribromophenoxyethyl methacrylate, pentabromophenoxyethyl acrylate, pentabromophenoxyethyl methacrylate, 2,2-bis(4-methacryloxyethoxy-3,5-dibromophenyl)propane, 2,2-bis(4-acryloxyethoxy-3,5-dibromophenyl)propane, diallyl phthalate, diallyl isophthalate and benzyl acrylate.

Among the foregoing vinyl monomers (B), styrene, chlorostyrene, bromostyrene, dibromostyrene, tribromophenyl methacrylate, tribromophenoxyethyl methacrylate and divinylbenzene are preferred.

In the present invention, it is preferred that a vinyl monomer (B) having an aromatic ring, which gives a homopolymer having a refractive index of at least 1.55, be used. A vinyl monomer (B) having a nucleus-halogen-substituted aromatic ring is especially preferred.

The copolymerization ratio of the vinyl monomer (B) having an aromatic ring to the urethanized acrylic or methacrylic monomer (A) should be up to 70% by weight based on the sum of the monomers (A) and (B). If the copolymerization ratio of the monomer (B) exceeds 70% by weight, the intended improvement of the impact resistance cannot be attained, and the flexural strength, heat softening property and cutting or grinding property are degraded.

In the present invention, up to 20% by weight of another polymerizable monomer may be copolymerized in addition to the monomers (A) and (B), or up to 20% by weight of another polymer may be blended.

A process for making a plastic lens from the above-mentioned plastic lens resin of the present invention will now be described.

The cast polymerization process is adopted for the preparation of a plastic lens. The cast polymerization process is characterized in that the starting monomers are directly polymerized and cured and simultaneously molded into the form of a lens. Accordingly, the molding distortion is reduced and the obtained lens is excellent in optical uniformity. Therefore, most of commercially available dioptral lenses are now prepared according to this process.

The monomers (A) and (B) are mixed together, and a customary polymerization inhibitor is added to the mixture to preliminarily advance the reaction to some extent (pre-polymerization). Dissolved gases such as air are removed in vacuo and the pre-polymerization product is cast in a mold, where polymerization is carried out under heating.

In order to reduce the distortion in the resulting lens, it is preferred that in the initial stage, the polymerization reaction be carried out at a relatively low temperature, for example, 40 to 50°C and with advance of the reaction, the temperature be elevated to about 110°C to gradually effect addition polymerization.

Any of known polymerization initiators can be used, but an appropriate polymerization initiator should be selected depending upon the intended reaction temperature. For example, there are preferably used 1,1-azobiscyclohexane carbonate, diisopropylperoxy carbonate, 1,1'-azobiscyclohexane nitrate and di-tert-butyl peroxide.

The plastic lens composed of the resin of the present invention has the following improved characteristics as compared with commercially available plastic lenses.

(1) The refractive index and toughness are high.

(2) The impact strength is improved.

(3) The percent shrinkage at the polymerization molding step is relatively low.

(4) The acrylic or methacrylic monomer and the isocyanate compound can be appropriately chosen, whereby the optical characteristics can be freely adjusted.

(5) The flexural modulus of elasticity is improved.

The plastic lens composed of the resin of the present invention may be subjected to a known physical or chemical surface treatment for imparting the reflection-preventing property, high hardness, abrasion resistance, chemical resistance and anti-fogging property to the lens. For example, there is preferably adopted a method in which two coatings of different refractive indexes are formed to attain a reflection-preventing effect, a method in which a coating layer having a high hardness is formed on the surface by coating with a polysiloxane or silica sol, a method in which a surface coating is dyed to improve the fashion characteristic, a method in which a metal film is formed on the surface e.g. by vacuum deposition to impart a mirror effect, and a method in which a moisture-absorbing coating is formed on the surface to prevent fogging.

An appropriate additive selected from a release agent, an ultraviolet absorber, an antioxidant, a discoloration-preventing agent, an antistatic agent, a fluorescent dye and a stabilizer may be used at the polymerization step according to need.

The present invention will now be described in detail with reference to examples and corresponding comparative examples. From the results of these examples and comparative examples, it will readily be understood that if a specific urethanized polyfunctional acrylate or methacrylate having a nucleus-halogen-substituted aromatic ring is used according to the present invention, the refractive index, rigidity and impact resistance are highly improved. Of course, these examples by no means limit the scope of the invention.

In the examples and comparative examples, the physical properties were determined according to the following test methods.

Refractive Index and Abbe Number

The measurement was carried out at 20°C by using an Abbe refractometer. The wavelength used for the measurement was of the D-ray at 589.29 nm (5892.9 Å).

Color

The color of a plate or molded lens was observed with the naked eye.

Impact Strength

The impact strength was measured by a Dynstat tester. Test pieces had a thickness of 2.7 to 3.0 mm and a width of 10 mm.

Rigidity

The rigidity was determined according to the method of ASTM D747. Test pieces had a size of 30 mm × 10 mm × 3 mm.

Flexural Property

The flexural property was determined according to the method of ASTM D770. Test pieces had a size of 80 mm × 10 mm × 3 mm.

Cutting and Grinding Properties

A sample lens was compared with a lens obtained in Comparative Example 2 with respect to the cutting and grinding properties.

Example 1

0.01 part by weight of dibutyltin dilaurate as an NCO—OH reaction catalyst and 0.1 part by weight of di-tert-butyl peroxide as a polymerization initiator were added to 18.0 parts by weight of xylylene diisocyanate and 82.0 parts by weight of 3-(2,4-dibromophenoxy)-2-hydroxypropyl acrylate, and the mixture was sufficiently stirred.

The liquid mixture was cast in a mold constructed by a glass sheet having a diameter of 100 mm and a polyethylene gasket while the liquid mixture was heated at 40 to 50°C. The cast polymerization was carried out in the following manner.

Namely, the mixture was heated at 60°C for 5 hours to complete the NCO/OH reaction, and subsequently, the temperature was elevated to 80°C and then, the temperature was elevated stepwise from 80°C to 120°C. Thus, the polymerization was conducted over a period of 30 hours.

After completion of the polymerization, the mold was gradually cooled, and the polymer was parted from the mold. The physical properties of the polymer were measured to obtain results shown in Table 1. The obtained resin was tough, colorless and transparent, and the refractive index $n_D$ was as high as 1.61 and the Abbe number was 34.

Example 2

0.001 part by weight of dibutyltin dilaurate as an NCO—OH reaction catalyst and 0.1 part by weight of di-tert-butyl peroxide were added to 11.5 parts by weight of 2-isocyanatoethyl-2,6-diisocyanatohexanoate and 88.5 parts by weight of 2-(4-acryloxyethoxy-3,5-dibromophenyl)-2-(4-hydroxyethoxy-3,5-dibromophenyl)propane, and the mixture was sufficiently stirred. Since the liquid mixture had a high viscosity and it was difficult to form a homogeneous mixture, the mixture was diluted with dimethylformamide as a solvent to form a homogeneous composition, followed by complete removal of the solvent.

The liquid mixture was heated to 50°C to reduce the viscosity, and the mixture was cast in a mold constructed from a glass sheet having a diameter of 100 mm and a polyethylene gasket. The cast polymerization was carried out in the following manner.

Namely, the mixture was heated at 60°C for 5 hours to complete the NCO/OH reaction, and subsequently, the temperature was elevated to 80°C and the temperature was elevated stepwise from 80°C to 120°C. Thus, the polymerization was conducted over a period of 30 hours.

After completion of the polymerization, the mold was gradually cooled and the polymer was parted from the mold, and the physical properties of the polymer were measured to obtain results shown in Table 1. The obtained resin was tough, colorless and transparent, and the refractive index $n_D$ was as high as 1.61 and the Abbe number was 34.

Example 3

To a mixture of 10 parts by weight of xylylene diisocyanate, 50 parts by weight of 3-(2,4-dibromophenoxy)-2-hydroxypropyl acrylate and 40 parts by weight of divinylbenzene was added dibutyltin dilaurate as a reaction catalyst in an amount of 100 ppm based on the mixture, and the mixture was heated at 50°C for 2 hours. Then, the mixture was cooled to room temperature and 0.3% by weight of diisopropyl peroxydicarbonate was added as a radical polymerization initiator. The obtained liquid mixture had a low viscosity and could easily be cast in a lens mold. The liquid was heated at 30°C for 20 hours, at 40°C for 3 hours, at 50°C for 3 hours, at 60°C for 3 hours, at 80°C for 3 hours and at 100°C for 2 hours to effect curing

reaction. The obtained resin was tough, colorless and transparent and was excellent in uniformity. The refractive index $n_D$ as measured at 20°C was as high as 1.61 and the Abbe number was 31.

The percent shrinkage of the resin at the polymerization step was about 7%.

Example 4

A mixture comprising 14.9 parts by weight of hexamethylene diisocyanate, 45.1 parts by weight of 3-(2,4,6-tribromophenoxy)-2-hydroxypropyl acrylate, 20 parts by weight of styrene, 20 parts by weight of divinylbenzene and 0.01 part by weight of dibutyltin dilaurate was heated at 50°C for 2 hours to conduct the reaction. The reaction mixture was cooled to room temperature and 0.3 part by weight of azobisisobutyronitrile as a polymerization initiator was added.

The resulting liquid having a low viscosity was cast in a lens mold and heated at 50°C for 10 hours, at 60°C for 10 hours, at 70°C for 5 hours, at 80°C for 3 hours at 100°C for 2 hours to effect curing reaction.

The obtained molded resin was colorless and transparent and excellent in uniformity, and the resin was hard and tough. The refractive index $n_D$ of the resin as measured at 20°C was as high as 1.63 and the Abbe number was 32. The percent shrinkage of the polymer at the polymerization step was about 7%.

Example 5

A mixture comprising 10 parts by weight of xylylene diisocyanate, 40 parts by weight of 3-(2,4-dibromo-3-methylphenoxy)-2-hydroxypropyl acrylate, 50 parts by weight of chlorostyrene and 0.01 part by weight of dibutyltin dilaurate was heated at 50°C for 3 hours. Then, the reaction mixture was cooled to room temperature, and a polymerization initiator comprising 0.1 part by weight of diisopropyl peroxydicarbonate and 0.2 part by weight of di-t-butyl peroxide was added. The obtained liquid mixture had a low viscosity and could easily be cast in a lens mold. The temperature was gradually elevated from 30°C to 120°C over a period of 3 hours to effect polymerization reaction.

The obtained molded article was colorless, transparent and tough, and the refractive index $n_D$ as determined at 20°C was 1.60 and the Abbe number was 35.

The percent shrinkage of the resin at the polymerization step was about 7%.

Example 6

A mixture comprising 10 parts by weight of bis(isocyanatomethyl)cyclohexane, 24 parts by weight of 3-(2,4,6-tribromo-3-methylphenoxy)-2-hydroxypropyl acrylate, 16 parts by weight of 3-(3-methyl-5-bromophenoxy)-2-hydroxypropyl acrylate, 25 parts by weight of divinylbenzene, 25 parts by weight of tribromophenyl methacrylate and 0.01 part by weight of dibutyltin dilaurate was heated at 50°C for 3 hours to effect reaction. The reaction mixture was cooled to room temperature and 0.2 part by weight of di-tert-butyl peroxide was added thereto. The resulting liquid was cast in a lens mold and the temperature was gradually elevated from 70°C to 120°C over a period of 30 hours to effect curing reaction. The percent shrinkage during the polymerization was about 7%.

The obtained resin was colorless, transparent, hard and excellent in uniformity. The refractive index $n_D$ as determined at 20°C was as high as 1.62 and the Abbe number was 32.

Examples 7 and 8

Lenses were made in the same manner as described in Example 1 except that the compositions of the starting monomers were varied as indicated in Table 1. The obtained results are shown in Table 1. It is seen that the obtained resins had a high refractive index and were excellent in mechanical properties such as impact resistance.

Comparative Example 1

A mixture comprising 30 parts by weight of diallyl phthalate, 20 parts by weight of 2-hydroxyethyl acrylate and 19 parts by weight of bisphenol A was heated at 50°C to form a homogeneous solution. Then, 31 parts by weight of xylylene diisocyanate was added to the solution, and the mixture was heated at 50°C for 3 hours. Then, the reaction mixture was cooled to room temperature, and 0.5 part by weight of di-tert-butyl peroxide was added as a polymerization initiator. The thus-prepared solution was cast in a lens mold where the solution was heated at 70°C for 2 hours, at 100°C for 3 hours and at 130°C for 10 hours to effect curing reaction. The percent shrinkage during the polymerization was about 10%.

The obtained molded resin was colorless, transparent, hard and tough. The refractive index $n_D$ as measured at 20°C was only 1.58, but the Abbe number was 36.

Comparative Example 2

A solution formed by adding 3 parts by weight of diisopropyl peroxydicarbonate as a polymerization initiator to 100 parts by weight of diethylene glycol biasallylcarbonate was cast in a lens mold, where the solution was heated at 30°C for 10 hours, at 40°C for 2 hours, at 50°C for 2 hours, at 60°C for 4 hours, at 80°C for 2 hours and at 90°C for 2 hours. Then, the gasket was removed and the heating was further conducted at 100°C for 2 hours to effect curing reaction. The percent shrinkage of the resin during the polymerization was about 13%.

The obtained molded resin was colorless, transparent, hard and tough. The refractive index $n_D$ as measured at 20°C was 1.50 and the Abbe number was 58.

The results obtained in the foregoing Examples and Comparative Examples are summarized in Table 1.

TABLE 1

| | Monomer Composition (% by weight) | Refractive Index $n_D$ | Abbe NumberD | Color | Impact Strength ($kg/cm^2$) | Rigidity ($kg/mm^2$) | Flexural Property (mm) | Cutting and Grinding Properties |
|---|---|---|---|---|---|---|---|---|
| Example 1 | XDI—$Br_2$PHPA (18—82) | 1.61 | 34 | Colorless, transparent | 9.5 | 440 | 6.0 | Good |
| Example 2 | LTI—AE$Br_2$HE$Br_2$PP (11.5—88.5) | 1.61 | 34 | " | 10.2 | 430 | 6.2 | Good |
| Example 3 | XDI—$Br_2$PHPA/DVB (10—50/40) | 1.61 | 31 | " | 8.0 | 502 | 3.5 | Good |
| Example 4 | HMDI—$Br_3$PHPA/ST/DVB (10—50/20/20) | 1.63 | 32 | " | 8.5 | 460 | 3.7 | Good |
| Example 5 | XDI—$Br_2$MPHPA/ClST (10—40/50) | 1.60 | 35 | " | 8.0 | 501 | 3.3 | Good |
| Example 6 | $H_{12}$MDI—$Br_3$MPHPA/ MBrPHPA/DVB/$Br_3$PMA (10—24/16/25/25) | 1.62 | 32 | " | 9.1 | 483 | 3.8 | Good |
| Example 7 | HMDI—AE$Br_2$H$Br_2$PP/ClST (5.7—44.3/50) | 1.61 | 33 | " | 9.5 | 453 | 4.0 | Good |
| Example 8 | LTI—AE$Br_2$HE$Br_2$PP/BrST (5.8—44.2/50) | 1.62 | 32 | " | 9.7 | 450 | 4.1 | Good |
| Comparative Example 1 | XDI—HEMA—BPA/DAP (70/30) | 1.58 | 36 | " | 6.0 | 390 | 3.5 | Good |
| Comparative Example 2 | DEGBAC (100) | 1.50 | 58 | " | 4.5 | 240 | 6.5 | Good |

The abbreviations in Table 1 indicate the following compounds.

LTI: 2-isocyanatoethyl-2,6-diisocyanatohexanoate
XDI: xylylene diisocyanate
HMDI: hexamethylene diisocyanate
$H_{12}MDI$: 4,4'-dicyclohexylmethane diisocyanate
$Br_2PHPA$: 3-(2,4-dibromophenoxy)-2-hydroxypropyl acrylate
$AEBr_2HEBr_2PP$: 2-(4-acryloxyethoxy-3,5-dibromophenyl)-2-(4-hydroxyethoxy-3,5-dibromophenyl)propane
$Br_3PHPA$: 3-(2,4,6-tribromophenoxy)-2-hydroxypropyl acrylate
$Br_2MPHPA$: 3-(2,4-dibromo-3-methylphenoxy)-2-hydroxypropyl acrylate
$Br_3MPHPA$: 3-(2,4,6-tribromo-3-methylphenoxy)-2-hydroxypropyl acrylate
MBrPHPA: 3-(3-methyl-5-bromophenoxy)-2-hydroxypropyl acrylate
$AEBr_2HBr_2PP$: 2-(4-acryloxyethoxy-3,5-dibromophenyl)-2-(4-hydroxy-3,5-dibromophenyl)propane
DVB: divinylbenzene
ST: styrene
CIST: chlorostyrene (o-isomer/p-isomer weight ratio = 65/35)
BrST: bromostyrene
HEMA: 2-hydroxyethyl acrylate
DAP: diallyl phthalate
BPA: bisphenol A
DEGBAC: diethylene glycol bisallylcarbonate

**Claims**

1. A resin material for a plastic lens, which comprises a polymer formed by polymerizing a urethanized acrylic or methacrylic monomer obtained by reacting the hydroxyl group of an acrylic or methacrylic monomer having, in the molecule, a hydroxyl group and an aromatic ring substituted by chlorine, bromine or iodine with the isocyanate group of a polyfunctional isocyanate.

2. A resin material for a plastic lens according to claim 1, wherein the said acrylic or methacrylic monomer is at least one member selected from the group consisting of compounds represented by the following general formulae (I), (II) and (III):

(I) 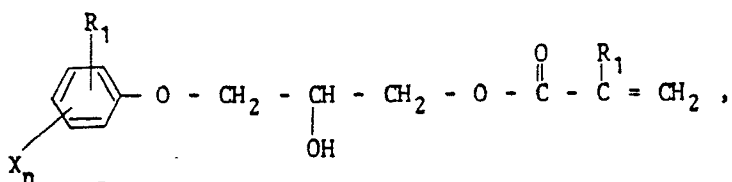 ,

(II) 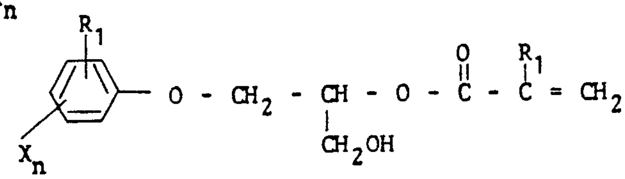

and

(III) 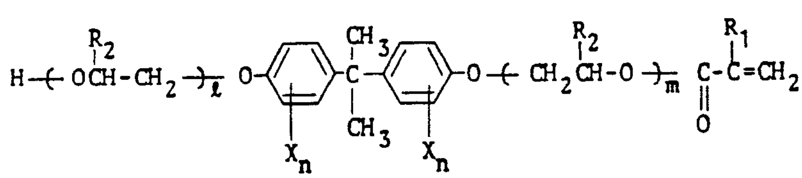

wherein X is chlorine, bromine or iodine, each of $R_1$ and $R_2$ is hydrogen or a methyl group, n is an integer of from 1 to 4, and l and m are integers of from 0 to 4, with the proviso that the sum of l and m is from 0 to 4.

3. A resin material for a plastic lens according to claim 1 or 2, wherein said polymer is a copolymer formed by copolymerizing said urethanized acrylic or methacrylic monomer with at least one other vinyl monomer having an aromatic ring.

4. A resin material for a plastic lens according to claim 3, wherein said other vinyl monomer having an aromatic ring has a nucleus-halogen-substituted aromatic ring.

5. A resin material for a plastic lens according to claim 4, wherein the halogen is at least one member selected from the group consisting of chlorine, bromine and iodine.

6. A resin material for a plastic lens according to claim 3, 4 or 5, wherein the copolymerization ratio of said other vinyl monomer having an aromatic ring to the said urethanized acrylic or methacrylic monomer is up to 70% by weight of the total weight of the said other vinyl and urethanized acrylic or methacrylic monomer.

7. A resin material for a plastic lens according to any one of claims 3 to 6, wherein said other vinyl monomer having an aromatic ring gives a polymer having a refractive index of at least 1.55 when said other vinyl monomer is homopolymerized.

8. A resin material for a plastic lens according to any one of the preceding claims, wherein the polyfunctional isocyanate is a diisocyanate.

9. A resin material for a plastic lens according to any one of the preceding claims, which has a refractive index of at least 1.60.

10. A plastic lens formed by cast-polymerizing a urethanized acrylic or methacrylic monomer obtained by reacting the hydroxyl group of an acrylic or methacrylic monomer having in the molecule a hydroxyl group and an aromatic ring substituted by chlorine, bromine or iodine with the isocyanate group of a polyfunctional isocyanate.

11. A plastic lens according to claim 10, wherein the said acrylic or methacrylic monomer is at least one compound represented by the following general formula (I), (II) or (III), given and defined in claim 2.

12. A plastic lens according to claim 10, wherein the urethanized acrylic or methacrylic monomer is cast-copolymerized with another vinyl monomer having an aromatic ring.

**Patentansprüche**

1. Harzmaterial für eine plastische Linse aus einem Polymer, hergestellt durch Polymerisation eines urethanisierten acrylischen oder methacrylischen Monomeren, erhalten durch Umsetzung der Hydroxygruppe eines acrylischen oder methacrylischen Monomeren, das im Molekül eine Hydroxygruppe und einen aromatischen Ring, substituiert durch Chlor, Brom oder Iod aufweist, mit der Isocyanatgruppe einen polyfunktionellen Isocyanates.

2. Harzmaterial für eine plastische Linse nach Anspruch 1, in dem das acrylische oder methacrylische Monomer mindestens ein Glied, ausgewählt aus einer Gruppe von Verbindugnen der folgenden allgemeinen Formeln (I), (II) und (III) ist:

(I) 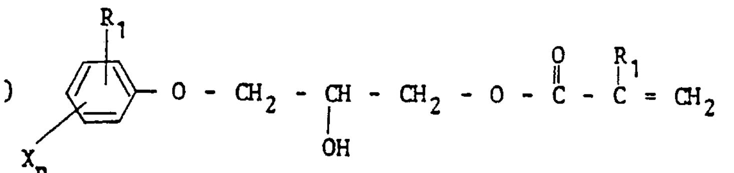 ,

(II) 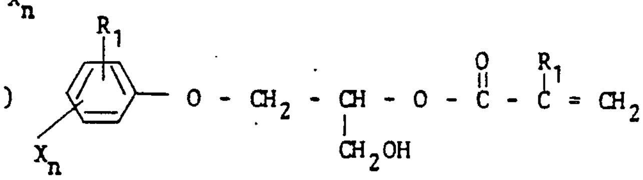

und

(III) 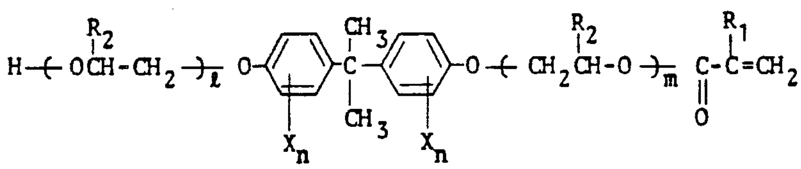

in der X Chlor, Brom oder Iod ist, $R_1$ und $R_2$ jeweils für Wasserstoff oder eine Methylgruppe stehen, n eine ganze Zahl von 1 bis 4 ist und l und m ganze Zahlen von 0 bis 4 sind, wobei gilt, daß die Summe von l und m gleich 0 bis 4 beträgt.

3. Harzmaterial für eine plastische Linse nach Anspruch 1 oder 2, in dem das Polymer ein Copolymer ist, hergestellt durch Copolymerisation des urethanisierten acrylischen oder methacrylischen Monomeren mit mindestens einem anderen Vinylmonomeren mit einem aromatischen Ring.

4. Harzmaterial für eine plastische Linse nach Anspruch 3, in dem das andere Vinylmonomer mit einem aromatischen Ring einen im Kern Halogen-substituierten aromatischen Ring aufweist.

5. Harzmaterial für eine plastische Linse nach Anspruch 4, in dem das Halogen mindestens ein Glied ausgewählt aus der Gruppe aus Chlor, Brom oder Iod ist.

6. Harzmaterial für eine plastische Linse nach Anspruch 3, 4 oder 5, in dem das Copolymerisationsverhältnis des anderen Vinylmonomeren mit einem aromatischen Ring zu dem urethanisierten acrylischen oder methacrylischen Monomeren bis zu 70 Gew.-% des Gesamtgewichtes des anderen Vinyl- und urethanisierten acrylischen oder methacrylischen Monomeren ausmacht.

7. Harzmaterial für eine plastische Linse nach einem der Ansprüche 3 bis 6, in dem das andere Vinylmonomer mit einem aromatischen Ring ein Polymer mit einem Brechungsindex von mindestens 1,55 ergibt, wenn das andere Vinylmonomer homopolymerisiert wird.

8. Harzmaterial für eine plastische Linse nach einem der vorstehenden Ansprüche, in dem das polyfunktionelle Isocyanat ein Diisocyanat ist.

9. Harzmaterial für eine plastische Linse nach einem der vorstehenden Ansprüche, das einen Brechungsindex von mindestens 1,60 hat.

10. Plastische Linse, hergestellt durch Gieß-Polymerisation eines urethanisierten acrylischen oder methacrylischen Monomeren, erhalten durch Umsetzung der Hydroxygruppe eines acrylischen oder methacrylischen Monomeren, das im Molekül eine Hydroxygruppe und einen aromatischen Ring, substituiert durch Chlor, Brom oder Iod enthält, mit der Isocyanatgruppe eines polyfunktionellen Isocyanates.

11. Plastische Linse nach Anspruch 10, in der das acrylische oder methacrylische Monomer mindestens eine Verbindung ist, die durch die folgende allgemeine Formel (I), (II) oder (III) dargestellt wird, wie sie in Anspruch 2 angegeben und definiert ist.

12. Plastische Linse nach Anspruch 10, in der das urethanisierte acrylische oder methacrylische Monomer mit einem anderen Vinylmonomeren mit einem aromatischen Ring durch Vergießen copolymerisiert ist.

**Revendications**

1. Matériau de résine pour lentille en matière plastique, qui comprend un polymère préparé par polymérisation d'un monomère acrylique ou méthacrylique uréthanisé obtenu en faisant réagir le groupe hydroxyle d'un monomère acrylique ou méthacrylique ayant dans sa molécule un groupe hydroxyle et un cycle aromatique substitué par le chlore, le brome ou l'iode, avec le groupe isocyanate d'un isocyanate à plusieurs fonctions.

2. Matériau de résine pour lentille en matière plastique conforme à la revendication 1, dans lequel le monomère acrylique ou méthacrylique est au moins un élément choisi dans le groupe constitué par les composés représentés par les formules générales (I), (II) et (III) suivantes:

(I) 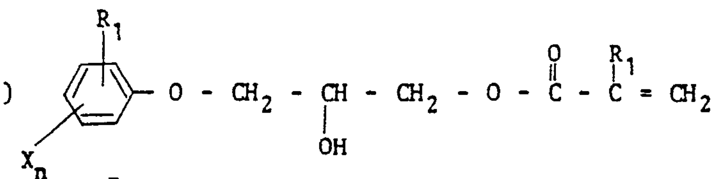 ,

(II) 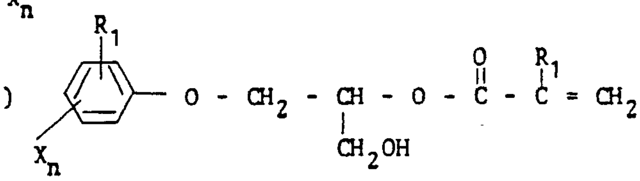

et

(III) 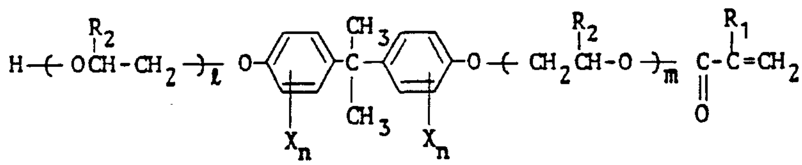

dans lesquelles X représente le chlore, le brome ou l'iode, $R_1$ et $R_2$ représentent chacun un groupe méthyle ou l'hydrogène, n est un entier allant de 1 à 4, et l et m sont des entiers allant de 0 à 4 avec la condition supplémentaire que la somme l + m est un entier allant de 0 à 4.

3. Matériau de résine pour lentille en matière plastique conforme à la revendication 1 ou 2, dans lequel le polymère est un copolymère formé par copolymérisation du monomère acrylique ou méthacrylique uréthanisé avec au moins un autre monomère vinylique ayant un cycle aromatique.

4. Matériau de résine pour lentille en matière plastique conforme à la revendication 3, dans lequel l'autre monomère vinylique ayant un cycle aromatique a un cycle aromatique avec un noyau substitué par un halogène.

5. Matériau de résine pour lentille en matière plastique conforme à la revendication 4, dans lequel l'halogène est au moins un élément choisi dans le groupe constitué par le chlore, le brome et l'iode.

6. Matériau de résine pour lentille en matière plastique conforme à l'une des revendications 3, 4 ou 5, dans lequel le taux de copolymérisation de l'autre monomère vinylique ayant un cycle aromatique par rapport au monomère acrylique ou méthacrylique uréthanisé peut atteindre 70 pour cent en poids total de l'autre monomère vinylique et du monomère acrylique ou méthacrylique uréthanisé.

7. Matériau de résine pour lentille en matière plastique conforme à l'une quelconque des revendications 3 à 6, dans lequel l'autre monomère vinylique ayant un cycle aromatique donne un

polymère ayant un indice de réfraction d'au moins 1,55 lorsque l'autre monomère vinylique est homopolymérisé.

8. Matériau de résine pour lentille en matière plastique conforme à l'une quelconque des revendications précédentes, dans lequel l'isocyanate à plusieurs fonctions est un diisocyanate.

9. Matériau de résine pour lentille en matière plastique conforme à l'une quelconque des revendications précédentes, qui a un indice de réfraction d'au moins 1,60.

10. Lentille en matière plastique réalisée par polymérisation par coulée d'un monomère acrylique ou méthacrylique uréthanisé obtenu en faisant réagir le groupe hydroxyle d'un monomère acrylique ou méthacrylique ayant dans sa molécule un groupe hydroxyle et un cycle aromatique substitué par le chlore, le brome ou l'iode, avec le groupe isocyanate d'un isocyanate à plusieurs fonctions.

11. Lentille en matière plastique conforme à la revendication 10, dans laquelle le monomère acrylique ou méthacrylique est au moins un composé représenté par les formules générales (I), (II), ou (III) données et définies dans la revendication 2.

12. Lentille en matière plastique conforme à la revendication 2, dans laquelle le monomère acrylique ou méthacrylique uréthanisé est copolymérisé par coulée avec un autre monomère vinylique ayant un cycle aromatique.